# EUROPÄISCHE PATENTANMELDUNG

(11) **EP 1 801 951 A1**
(43) Veröffentlichungstag der Anmeldung: **27.06.2007**
(21) Anmeldenummer: 06121523.2
(22) Anmeldetag: 29.09.2006
(51) Int. Cl.: H02J 13/00

(54) **Vorrichtung zur Stromversorgung von Feldgeräten**

(30) Priorität: 23.12.2005 DE 102005061845
(71) Anmelder: SIEMENS AKTIENGESELLSCHAFT, 80333 München (DE)
(72) Erfinder: Rebbereh, Carsten, 90768, Fürth (DE)

(57) **Zusammenfassung**

Die Erfindung bezieht sich auf eine Vorrichtung (2) zur Stromversorgung wenigstens eines Feldgerätes (4) mit einer Gleichspannung, wobei diese Vorrichtung (2) einen mehrpoligen Hauptschalter (22) und eine Gleichspannungs-Versorgungseinrichtung (28) aufweist, die wechselspannungsseitig jeweils mittels eines Leitungsschutzes mit einem speisenden Netz (6) verbunden sind. Erfindungsgemäß ist diese Gleichspannungs-Versorgungseinrichtung (28) gleichspannungsseitig mittels eines zweipoligen Schalters (34) jeweils mit einer Leitung (36, 38) eines an den Ausgangs-Anschlüssen der Vorrichtung (2) angeschlossenen Stromversorgungskabels (30) verbindbar und sind der mehrpolige Hauptschalter (22) und dieser zweipolige Schalter (34) betätigungsseitig miteinander gekoppelt. Somit erhält man eine Vorrichtung (2) zur Stromversorgung wenigstens eines Feldgerätes (4), wobei kein separates Gleichstrom-Versorgungskabel (32) mehr benötigt wird.

## Beschreibung

Die Erfindung bezieht sich auf eine Vorrichtung zur Stromversorgung wenigstens eines Feldgerätes gemäß Oberbegriff des Anspruchs 1.

Bei Feldgeräten aller Art, u.a. Umrichter, Motorstarter, Ein-/Ausgabe-Bausteine, besteht die Notwendigkeit, auch bei abgeschalteter Netzspannungsversorgung mit den Geräten beispielsweise über einen Feldbus kommunizieren zu müssen. Dies ist insbesondere für die Inbetriebnahme, aber auch für Diagnosezwecke im Betrieb notwendig. Bei der Inbetriebnahme sind die Feldgeräte nicht ständig mit der Netzspannungsversorgung verbunden. Dadurch können sich diese Feldgeräte nicht aus der Netzspannung versorgen.

Aus der EP 0 593 995 A1 ist eine Vorrichtung bekannt, bei der Feldgeräte, beispielsweise umrichtergespeiste Motoren einer Förderanlage, mittels einer mehrphasigen Kraftstromleitung, einer Gleichstrom-Versorgungsleitung und eines Datenbusses mit einem zentralen Steuerschrank verbunden sind. In diesem zentralen Steuerschrank sind ein mehrpoliger Schaltschütz, eine Gleichspannungs-Versorgungseinrichtung und ein Steuersystem untergebracht. Der mehrpolige Schaltschütz ist netzseitig mit einem speisenden Netz verbunden. In den Feldgeräten sind alle drei Leitungsarten durchgeschliffen, d.h. die Leitungen sind also an keiner Stelle unterbrochen, sondern es werden die notwendigen Ströme oder Daten nur abgenommen bzw. abgegriffen.

Diese Variante, bei der eine Hilfsspannung mittels eines parallel geführten Kabels zu den Feldgeräten gebracht wird, weist folgende Vorteile auf:
- Vollständige Abschaltung der Netzspannung möglich, wodurch:

- gefahrlos am Feldgerät bei vorhandener Kommunikationsfähigkeit gearbeitet werden kann,
- das Risiko bei der Inbetriebnahme vermindert ist und wodurch
- ein sicheres Stillsetzen des dezentralen Antriebssystems möglich ist.

Jedoch weist diese Vorrichtung zur Stromversorgung wenigstens eines Feldgerätes jedoch auch Nachteile auf:
- Zusätzliches Kabel mit großem Querschnitt (wegen des Spannungsabfalls entlang des Kabels) verursacht zusätzliche Anlagenkosten.
- Bei zusätzlichem Kabel mit kleinem Querschnitt ist eine Zwischenspeisung der Hilfsspannung im Feld notwendig.
- Zusätzliche Steckverbinder (zumindest Klemmen und Durchführungen) sind notwendig, die besonders bei Geräten hoher Schutzart einen erheblichen Kostenfaktor darstellen, vor allem, wenn zusätzlich ein Durchschleifen der Hilfsspannung gefordert wird.
- Erheblicher Mehraufwand im Feldgerät erforderlich.

Der Erfindung liegt nun die Aufgabe zugrunde, diese bekannte Vorrichtung zur Stromversorgung wenigstens eines Feldgerätes derart weiterzubilden, dass ein zusätzliches Kabel für die Gleichstrom-Versorgung nicht mehr benötigt wird.

Diese Aufgabe wird erfindungsgemäß mit den kennzeichnenden Merkmalen des Anspruchs 1 gelöst.

Dadurch, dass die Gleichspannungs-Versorgungseinrichtung der Vorrichtung zur Stromversorgung mittels eines Schalters mit zwei Leitern des vorhandenen Stromversorgungskabels immer dann verbunden wird, wenn die Netzspannungsversorgung abgeschaltet ist, können die Feldgeräte mit einer Gleichspannung versorgt werden, ohne dass ein zusätzliches Gleichstrom-Versorgungskabel mehr verwendet werden muss. Im Normalbetrieb ist die Gleichspannungs-Versorgungseinrichtung in der Vorrichtung zur Stromversorgung von den Leitungen des Stromversorgungskabels abgeschaltet. In diesem Normalbetrieb erzeugen die Feldgeräte aus der Netzspannungsversorgung ihre benötigte Gleichspannung selber.

Da kein zusätzliches Gleichstrom-Versorgungskabel mehr benötigt wird, sind an den Feldgeräten auch keine zusätzlichen Stecker mehr notwendig. Dies ist vor allem bei Geräten hoher Schutzart ein großer Kostenvorteil. Da der Querschnitt des Stromversorgungskabels größer ist als der Querschnitt eines bisher verwendeten zusätzlichen Gleichstrom-Versorgungskabels für die Gleichstromversorgung, ist der Spannungsabfall entlang der Leitung des Stromversorgungskabels bei einer Gleichstromversorgung geringer. Dadurch können mehr Feldgeräte an der Vorrichtung zur Stromversorgung angeschlossen werden. Außerdem kann die Gleichspannung dabei bis zu einer Sicherheitsgrenze erhöht werden, wodurch aufgrund des sinkenden Stromes der Spannungsabfall entlang dieser Leitung abnimmt.

Da die Gleichspannung erst dann auf zwei Leitungen des Stromversorgungskabels geschaltet werden kann, wenn die Netzspannung abgeschaltet ist, müssen in jedem Feldgerät die Stromversorgung gepuffert bzw. eine vorhandene Pufferung zeitlich angepasst werden.

Zur weiteren Erläuterung der Erfindung wird auf die Zeichnung Bezug genommen, in der eine Ausführungsform der erfindungsgemäßen Vorrichtung schematisch veranschaulicht ist.

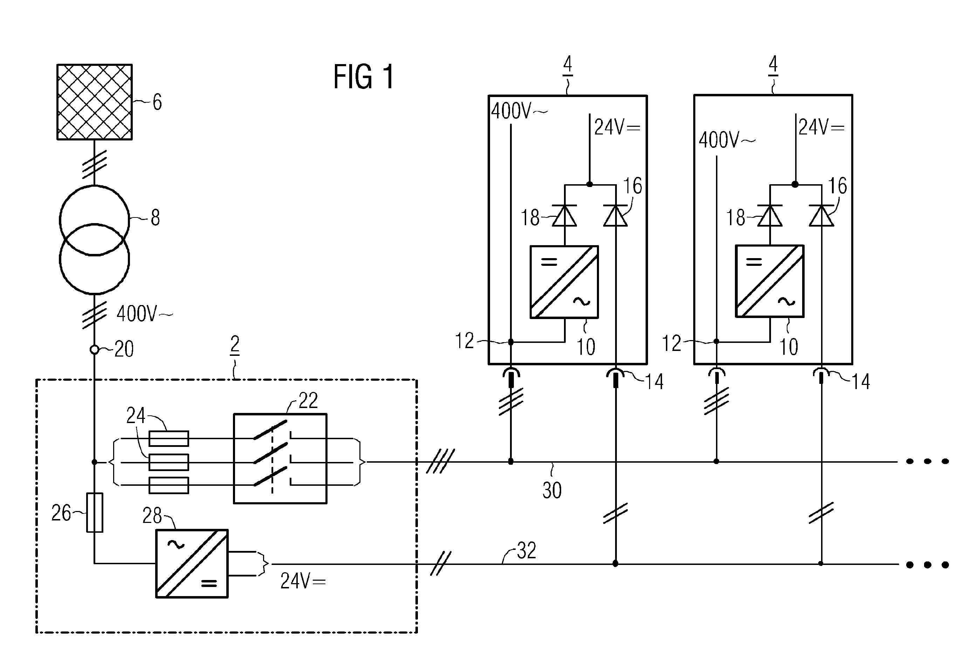

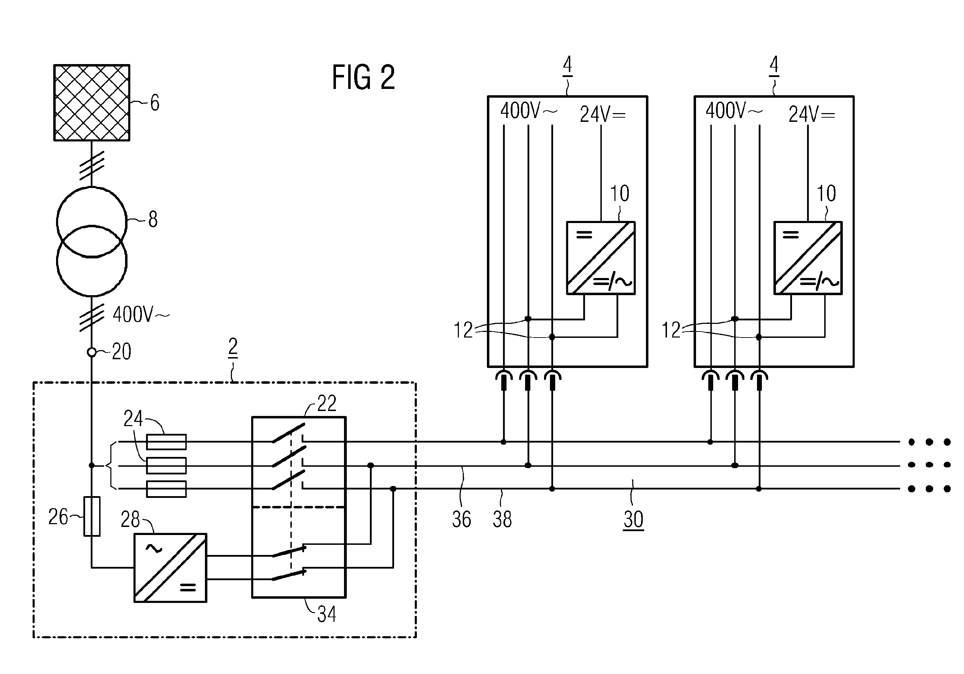

Fig. 1 zeigt eine gattungsgemäße Vorrichtung und in der Fig. 2 ist eine erfindungsgemäße Vorrichtung dargestellt.

In der Fig. 1 sind mit 2 eine Vorrichtung zur Stromversorgung wenigstens eines Feldgerätes, mit 4 jeweils ein Feldgerät, mit 6 ein speisendes Netz und mit 8 ein Netzspannungs-Transformator bezeichnet. Aus Übersichtlichkeitsgründen ist in jedem Feldgerät 4 nur sein Netzteil 10 schematisch veranschaulicht. Wechselspannungsseitig ist dieses Netzteil 10 mit einem Anschluss 12 für die Netzspannungs-Versorgung verknüpft. Am Ausgang dieses Netzteils 10 steht potentialgetrennt eine Gleichspannung mit einer Amplitude von beispielsweise 24V an. Diese Gleichspannung wird im Folgenden als Hilfsspannung bezeichnet. Außerdem weist jedes Feldgerät 4 einen weiteren Anschluss 14 auf. Dieser Anschluss 14 ist mittels einer Entkopplungsdiode 16 mit einem Anschluss 18 verbunden, an dem auch der Ausgang des Netzteils 10 mittels einer weiteren Entkopplungsdiode 18 angeschlossen ist.

An zentraler Stelle, beispielsweise in unmittelbarer Nähe eines Netzeinspeisepunktes 20, ist die Vorrichtung 2 zur Stromversorgung dieser Feldgeräte 4 angeordnet. Diese Vorrichtung 2 weist einen mehrpoligen Hauptschalter 22, beispielsweise einen Lasttrennschalter, mehrere Sicherungen 24 und 26 und eine Gleichspannungs-Versorgungseinrichtung 28 auf. Am Netzeinspeisepunkt 20 ist der Netzspannungs-Transformator 8 sekundärseitig angeschlossen, wobei dieser primärseitig mit dem speisenden Netz 6 verbunden ist. Ein derartiger Netzspannungs-Transformator 8 wird nicht benötigt, wenn der Wert der Spannungsversorgung der Feldgeräte 4 dem Wert des speisenden Netzes entspricht. Jeder Pol des Hauptschalters 22 ist netzseitig mittels einer Sicherung 24 mit einem Eingang der Vorrichtung 2 bzw. dem Netzeinspeisepunkt verknüpft. Lastseitig ist jeder Pol dieses Hauptschalters 22 mit einer Leitung eines Stromversorgungskabels 30 für die Feldgeräte 4 verbunden. Wechselspannungsseitig ist die Gleichspannungs-Versorgungseinrichtung 28 ebenfalls mit einer Sicherung 26 mit einem Eingang der Vorrichtung 2 bzw. dem Netzeinspeisepunkt 20 verknüpft. Gleichspannungsseitig ist diese Gleichspannungs-Versorgungseinrichtung 28 mit einem Gleichstrom-Versorgungskabel 32 verbunden, das parallel zum Versorgungskabel 30 geführt ist. Jedes Feldgerät 4 ist mit seinem Anschluss 14 mit diesem Gleichstrom-Versorgungskabel 32 derart verbunden, dass die generierte Gleichspannung abgegriffen wird. An Stelle der Sicherungen 24 und 26 kann auch jede andere Ausführungsform eines Leitungsschutzes verwendet werden.

In der Fig. 2 ist eine Vorrichtung 2 zur Versorgung wenigstens eines Feldgerätes 4 nach der Erfindung veranschaulicht. Diese erfindungsgemäße Vorrichtung 2 unterscheidet sich von der Vorrichtung 2 gemäß Fig. 1 dadurch, dass die Gleichspannungs-Versorgungseinrichtung 28 gleichspannungsseitig mittels eines zweipoligen Schalters 34 mit zwei Leitungen 36 und 38 des Stromversorgungskabels 30 verbindbar ist. In dieser Ausführungsform bilden der mehrpolige Hauptschalter 22 und der zweipolige Hauptschalter 34 eine Bauform. Betätigungsseitig sind diese beiden Schalter 22 und 34 miteinander verkoppelt. Wird der mehrpolige Hauptschalter 22 geschlossen, so ist der zweipolige Schalter 34 bereits unterbrochen. Der zweipolige Schalter 34 kann erst dann geschlossen werden, wenn der mehrpolige Hauptschalter 22 geöffnet ist. Während dieser Verriegelungszeit ist jedes Netzteil 4 nicht mehr mit einem speisenden Netz 6 verbunden und die Gleichspannungs-Versorgungseinrichtung 28 ist noch nicht mit den Leitungen 36 und 38 des Stromversorgungskabels 30 verbunden. Damit die Versorgung des Netzteils 10 eines jeden Feldgerätes 4 nicht unterbrochen ist, ist das Netzteil 10 gepuffert. Da die im Handel erhältlichen Netzteile 10 bereits gepuffert ausgeführt sind, muss diese Pufferung gegebenenfalls an die Verriegelungszeit angepasst werden.

Durch diese erfindungsgemäße Ausgestaltung der Vorrichtung 2 zur Stromversorgung wenigstens eines Feldgerätes 4 wird kein separates Gleichstrom-Versorgungskabel 32 mehr benötigt. Durch Wegfall dieses Gleichstrom-Versorgungskabels 32 benötigen die Feldgeräte 4 keine zusätzlichen Steckverbinder mehr, wodurch besonders bei Geräten hoher Schutzart ein erheblicher Kostenvorteil entsteht.

## Patentansprüche

1. Vorrichtung (2) zur Stromversorgung wenigstens eines Feldgerätes (4) mit einer Gleichspannung, wobei diese Vorrichtung (2) einen mehrpoligen Hauptschalter (22) und eine Gleichspannungs-Versorgungseinrichtung (28) aufweist, die wechselspannungsseitig jeweils mittels eines Leitungsschutzes mit einem speisenden Netz (6) verbunden sind, **dadurch gekennzeichnet, dass** diese Gleichspannungs-Versorgungseinrichtung (28) gleichspannungsseitig mittels eines zweipoligen Schalters (34) jeweils mit einer Leitung (36, 38) eines an den Ausgangs-Anschlüssen der Vorrichtung (2) angeschlossenen Stromversorgungskabels (30) verbindbar ist, und dass der mehrpolige Hauptschalter (22) und der zweipolige Schalter (34) betätigungsseitig miteinander gekoppelt sind.

2. Vorrichtung nach Anspruch 1, **dadurch gekennzeichnet, dass** ein Netzteil (10) eines jeden Feldgerätes (4) gepuffert ist.

3. Vorrichtung nach Anspruch 1 oder 2, **dadurch gekennzeichnet, dass** die Gleichspannungs-Versorgungseinrichtung (28) zwei elektrisch in Reihe geschaltete Netzteile (10) aufweist.

4. Vorrichtung nach einem der vorgenannten Ansprüche, **dadurch gekennzeichnet, dass** der mehrpolige Hauptschalter (22) und der zweipolige Schalter (34) eine Baueinheit bilden.

5. Vorrichtung nach einem der vorgenannten Ansprüche, **dadurch gekennzeichnet, dass** der mehrpolige Hauptschalter (22) ein Lasttrennschalter ist.

6. Vorrichtung nach einem der vorgenannten Ansprüche, **dadurch gekennzeichnet, dass** das Feldgerät (4) ein Umrichter ist.

7. Vorrichtung nach einem der Ansprüche 1 bis 5, **dadurch gekennzeichnet, dass** das Feldgerät (4) ein Motorstarter ist.

8. Vorrichtung nach einem der Ansprüche 1 bis 5, **dadurch gekennzeichnet, dass** das Feldgerät (4) ein Ein-/Ausgabe-Baustein ist.

9. Vorrichtung nach einem der vorgenannten Ansprüche, **dadurch gekennzeichnet, dass** als Leitungsschutz eine Sicherung (24, 26) vorgesehen ist.
